# EUROPEAN PATENT SPECIFICATION

(11) **EP 2 912 498 B1**
(45) Date of publication and mention of the grant of the patent: **05.05.2021**
(21) Application number: 13786833.7
(22) Date of filing: 24.10.2013
(51) Int. Cl.: G01V 11/00, G01V 99/00

(54) **ROCK FACIES PREDICTION IN NON-CORED WELLS FROM CORED WELLS**
GESTEINSFAZIESVORHERSAGE IN BOHRLÖCHERN OHNE KERNPROBE AUS BOHRLÖCHERN MIT KERNPROBE
PRÉVISION DE FACIÈS DE ROCHE DANS DES PUITS NON CAROTTÉS À PARTIR DE PUITS CAROTTÉS

(30) Priority: 29.10.2012 US 201261719594 P; 06.05.2013 US 201313888013
(43) Date of publication of application: 02.09.2015
(73) Proprietor: Saudi Arabian Oil Company, 31311 Dhahran (SA)
(72) Inventor: SUNG, Roger R., Dhahran 31311 (SA); LI, Yunsheng, Dhahran 31311 (SA); SUN, Chuanyu Stephen, Dhahran 31311 (SA)
(74) Representative: Robinson, David Edward Ashdown
(86) International application number: PCT/US2013/066561
(87) International publication number: WO 2014/070572

(56) References cited:
- US-A- 5 828 981
- US-B1- 6 374 185
- T Basu, M Claverie, D Nolan, K Yahya, M Suleiman: "Facies analysis: Integration of core and log data using a neural network as input for reservoir modeling in Betty Field, Malaysia", The Leading Edge , August 2004 (2004-08), XP001210333, Retrieved from the Internet: URL:http://library.seg.org/doi/pdf/10.1190 /1.1786905 [retrieved on 2014-06-30]
- WONG P M ET AL: "AN IMPROVED TECHNIQUE IN POROSITY PREDICTION: A NEURAL NETWORK APPROACH", IEEE TRANSACTIONS ON GEOSCIENCE AND REMOTE SENSING, IEEE SERVICE CENTER, PISCATAWAY, NJ, US, vol. 33, no. 4, 1 July 1995 (1995-07-01), pages 971-980, XP002066734, ISSN: 0196-2892, DOI: 10.1109/36.406683
- ARSLAN I ET AL: "Facies Modeling Using Multiple-Point Statistics: An Example from a carbonate Reservoir Section Located in a small Part of a Large Shelf Margin of Arabian Gulf, UAE", SPE INTERNATIONAL OIL AND GAS CONFERENCE AND EXHIBITION, XX, XX, 3 November 2008 (2008-11-03), pages 1-9, XP002596420,
- XUEPING MA ET AL: "3D reservoir modelling with the aid of artificial neural networks", COMPUTING, COMMUNICATION, CONTROL, AND MANAGEMENT, 2009. CCCM 2009. ISECS INTERNATIONAL COLLOQUIUM ON, IEEE, PISCATAWAY, NJ, USA, 8 August 2009 (2009-08-08), pages 446-450, XP031532434, ISBN: 978-1-4244-4247-8

## Description

### Cross Reference To Related Applications:

This application claims priority from U.S. Provisional Application No. 61/719,594, filed October 29, 2012 and Application No. 13/888,013, filed May 6, 2013.

### BACKGROUND OF THE INVENTION

### 1. Field of the Invention

The present invention relates to computerized simulation of physical structure of rock facies of hydrocarbon reservoirs in the earth, and in particular to determination of rock facies based on analysis by artificial neural networks using training images obtained from existing core samples and well logs from certain wells in the reservoir.

### 2. Description of the Related Art

A comprehensive oil and gas field development plan relies on various kinds of data. Data can be classified as soft or hard data. Soft data includes seismic data collected at the surface through reflection from the subsurface, offering an indirect measurement. Hard data such as well core data are observations based on actual rock extracted from the wellbore some thousands of feet deep. The well core data provides extremely accurate hard evidence of the reservoir in the vicinity of the wellbore at the subsurface depths. However, extraction of the rock samples during drilling for use as well cores is not only expensive but also possibly damaging to the well, particularly in regions of fragile rock. Therefore, not all wells which are drilled have well cores extracted. In developing an oil and gas field, it is not uncommon to have only tens of wells with core data within hundreds or thousands wells in that field. T Basu, M Claverie, D Nolan, K Yahya, M Suleiman: "Facies analysis: Integration of core and log data using a neural network as input for reservoir modelling in Betty Field, Malaysia", August 2004, describes a novel approach to perform multiwall facies analysis in the clastic reservoirs of Betty Field, Malaysia. US Patent Number US6374185 describes a system for generating an estimate of lithological characteristics of a region of the earth's subsurface. US5828981 describes methods of directly analyzing wireline well logging data to deriver pore types, pore volumes and capillary pressure curves from the wireline logs.

Well core data provides actual physical evidence of the subsurface structure. Well core data is thus extremely accurate and also critical for a definite knowledge of actual rock facies of the reservoir. Well core data provides real physical evidence of the earth from thousands feet beneath the surface. It is extremely revealing but carries a substantial cost to acquire. Not only does the usual drilling bit need to be pulled out to replace with the core acquiring instrument, but also the time consumed by multiple tool changes prolongs the procedure. Both of these factors add to the cost of the well. Therefore, usually only a small number of wells in a field development have core samples taken in current practice.

Wireline logs provide a measurement of the subsurface from various instruments attached behind the drilling bit along the wellbore. Well logs are much cheaper to acquire as compared to the core samples and the majority of wells have logs run in them.

Both well cores and well logs are indications of the rock types of the reservoir. Rock facies can be visually analyzed and interpreted quite accurately from the physical core rock. Different wireline logs respond differently depending on different geological settings. This is due to the signal sent out and received by the different wireline log devices. If there is a specific log which provides a clear correlation of the rock phases as indicated by the core, then the task of describing geology would be comparatively easy. This type of log could then be used in wells with no core available to predict the rock facies. In reality, such a scenario is very rare.

The traditional approach has been to analyze one well log at a time. However, due to not-so-evident response in one log versus others, multiple logs need to be analyzed comprehensively and simultaneously. This process therefore depends on the interpretation and experience by expert geoscientists and tends to be very time consuming.

In most geological environments, it is very unlikely for a single wireline log to indicate rock facies. It usually takes subtle correlation among multiple logs to identify. It is most frequently handled by geoscientists through study, knowledge, and experience. This human interaction and interpretation takes quite a long time, usually days or weeks. The accuracy is quite often compromised by leaving some wells and logs from the reservoir out of the interpretation process due to the field development time constraints.

### SUMMARY OF THE INVENTION

Briefly, the present invention provides a new and improved computer implemented method, system and data storage device according to the appended claims.

### BRIEF DESCRIPTION OF THE DRAWINGS

Figure 1 is a functional block diagram of a set of data processing steps performed in a data processing system for rock facies prediction of subsurface earth formations according to the present invention.
Figure 2A is a display of data resulting from one of the processing steps of Figure 1.
Figure 2B is a display of data resulting from one of the processing steps of Figure 1.
Figure 3A is a display of data resulting from one of the processing steps of Figure 1.
Figure 3B is a display of data resulting from one of the processing steps of Figure 1.
Figure 4 is a display of an example artificial neural network index map of different rock facies with contributions from wireline logs used during the processing steps of Figure 1.
Figure 5A is a display of data from a gamma ray wireline log from a first well for use in processing according to the present invention.
Figure 5B is a display of a neutron porosity wireline log from a second well for use in processing according to the present invention.
Figure 5C is a display of rock facies data from core description from a third well for use in processing according to the present invention.
Figure 5D is a display of a rock facies log for a fourth well predicted by Artificial Neural Network processing according to the present invention.
Figure 6A is a display of input core description data for processing according to the present invention.
Figure 6B is display of rock facies data from core descriptions for processing according to the present invention.
Figure 6C is a display of rock facies prediction data from processing according to the present invention.
Figure 6D is a display of facies distribution map data from processing according to the present invention.
Figure 7 is a three-dimensional display of a plot of three-dimensional rock facies distribution in a portion of a subsurface hydrocarbon reservoir.
Figure 8A is an example of manually entered core description data notes on paper as a function of depth in a well in a subsurface hydrocarbon reservoir.
Figure 8B is an example plot of digital rock facies data transformed from the notes of Figure 8A and displayed as a function of depth in the same well of the core description data of Figure 8A.
Figure 9A is a plot of a portion of a rock facies table as a as a function of depth in a well in a subsurface hydrocarbon reservoir obtained according to the present invention.
Figure 9B is a diagram depicting the relation between Figures 9B-1 and 9B-2.

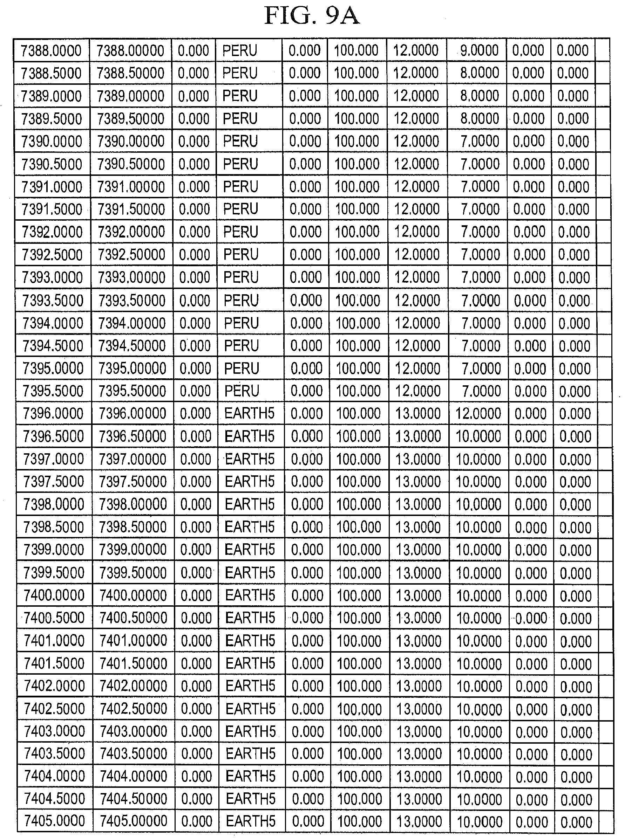

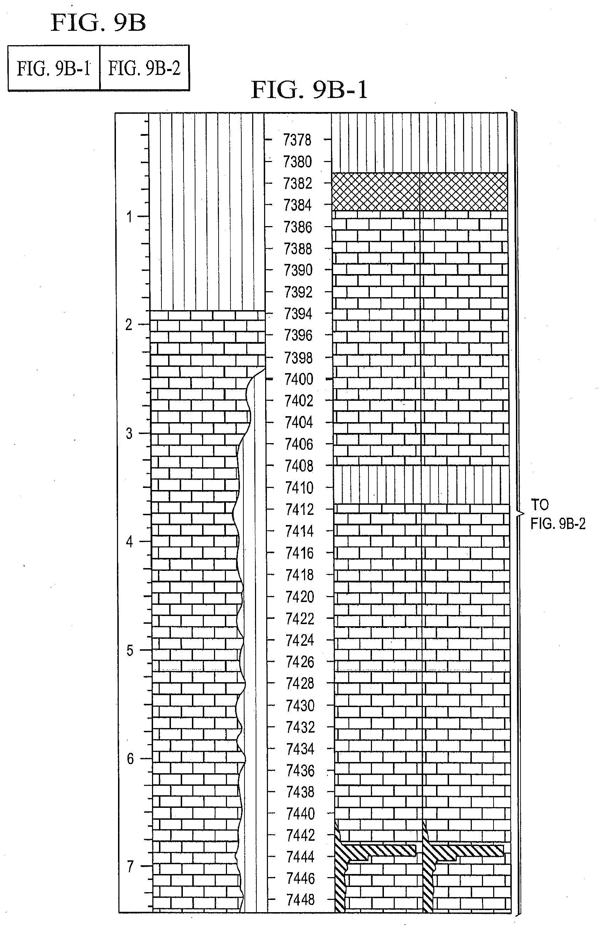

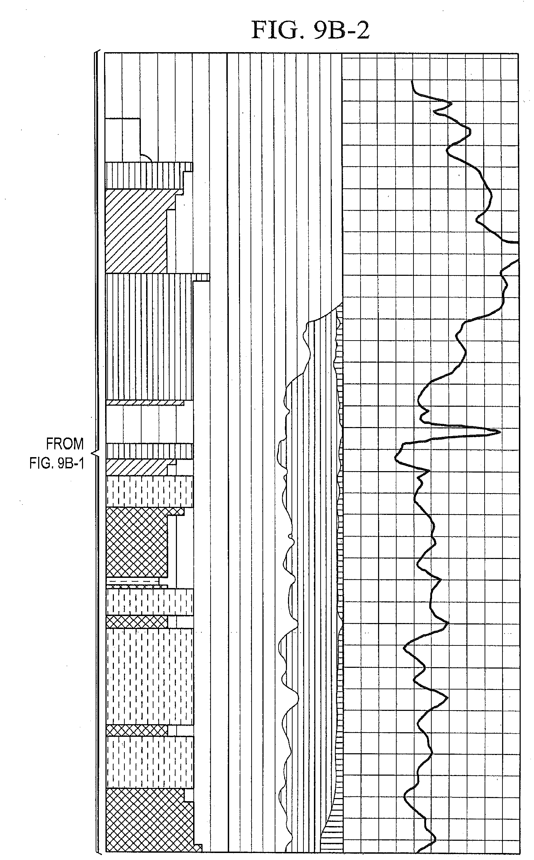

Figure 9B-1 is a plot of visual interpretation of the data from the rock facies table of Figure 9A.
Figure 9B-2 is a plot of visual interpretation of the data from the rock facies table of Figure 9A.

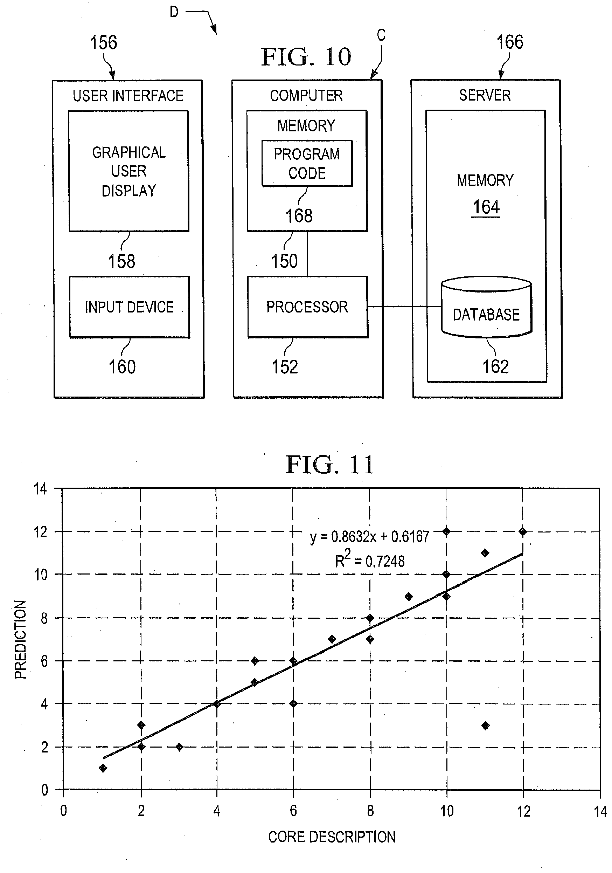

Figure 10 is a schematic block diagram of a data processing system for rock facies prediction of subsurface earth formations according to the present invention.
Figure 11 is a diagram of cross-correlation of rock facies data between core description data and prediction according to the present invention.

### DETAILED DESCRIPTION OF THE PREFERRED EMBODIMENTS

With the present invention, facies in wells of a hydrocarbon reservoir are predicted or postulated. Artificial neural networks are utilized to build a training image based on rock phases which are described and interpreted for each rock facies using existing data obtained from certain wells in the reservoir, and also well log characteristics of those same wells. Well logs from wells where no well core data has been collected are then analyzed against the training image and the rock facies in the non-cored wells are postulated.

As will be set forth, the present invention first incorporates rock phases described and interpreted based on using well core data from those wells in the reservoir where cores have been obtained. Well logs characteristics of the same wells are then examined for each rock facies. The present invention utilizes the data from interpretation of the well core data and the well log data from the same wells to build a training image in an artificial neural network. Well logs from uncored wells with no well core data collected or available are then analyzed against the training image, and predictions are then made of the rock facies in the uncored wells. A prediction model of rock facies of the reservoir is then formed, using the full set of data available from the wells of the reservoir.

The present invention predicts rock facies of reservoirs in wells from which no core data has been obtained or available. The rock facies prediction is confirmed to a high degree of confidence by cross-correlation with rock facies data from wells in which core data has been obtained. With the present invention, the need to acquire core data in a large number of wells for a clear understanding of reservoir rock facies has been substantially reduced. The cost saving with the present invention from the reduced need for many core acquisitions for rock facies determination is substantial. Accurate prediction of rock facies not only capitalizes upon the accuracy of the data from the existing well cores but also minimizes the substantial cost in acquiring an additional number of cores in other wells.

The prediction of rock facies is implemented by a data processing system D (Figure 10), as will be described. The data processing system D can be a mainframe computer of any conventional type of suitable processing capacity, or a cluster computer of a suitable number of processor nodes. An example of such a data processing system is a Linux Cluster arrangement which is commercially available. Other digital processors, however, may also be used, such as a mainframe, a personal computer, or any other suitable processing apparatus. It should thus be understood that a number of commercially available data processing systems may be used for this purpose.

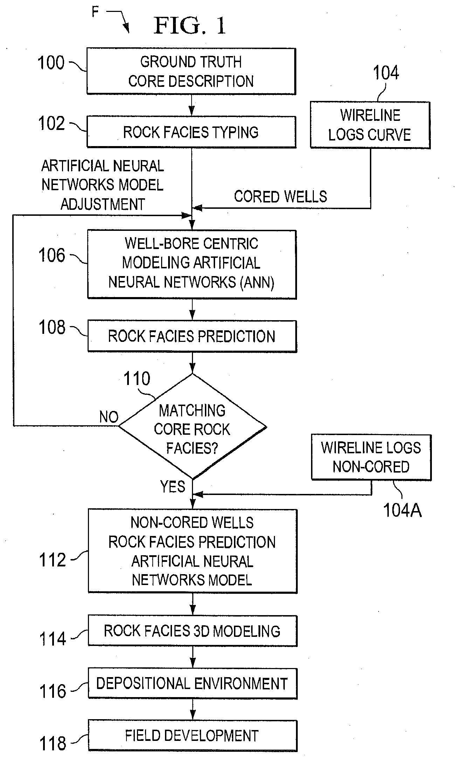

A flowchart F (Figure 1) indicates the basic computer processing sequence of the present invention and the cluster computation taking place for a rock facies prediction according to the present invention. The processing sequence of the flow chart F is performed separately for each well in the reservoir of interest whether both core and well log data are present or where only well log data are present.

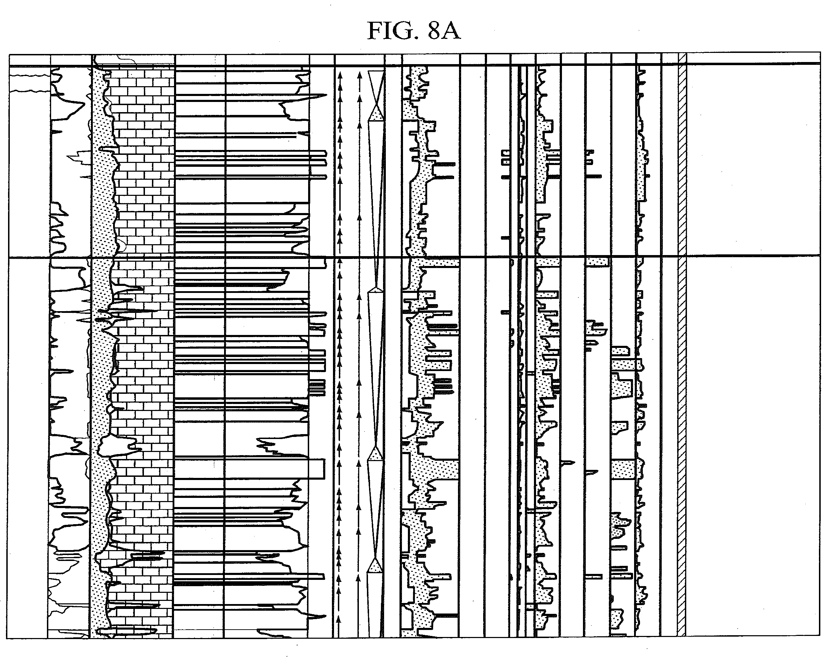

Ground Truth Core Description (Step 100): During step 100, core description information regarding the reservoir rock facies is developed. The core description information is based on actual measurements and observations, which are termed ground truth, taken from core samples from wells in the reservoir. Figure 8A is an example of raw core description data of the type developed and noted manually by well core analysts based on analysis of well core rock samples during core description of the type performed in step 100.

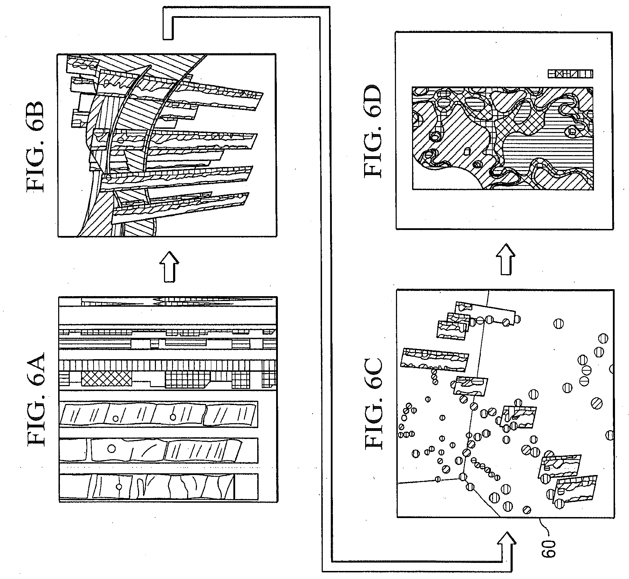

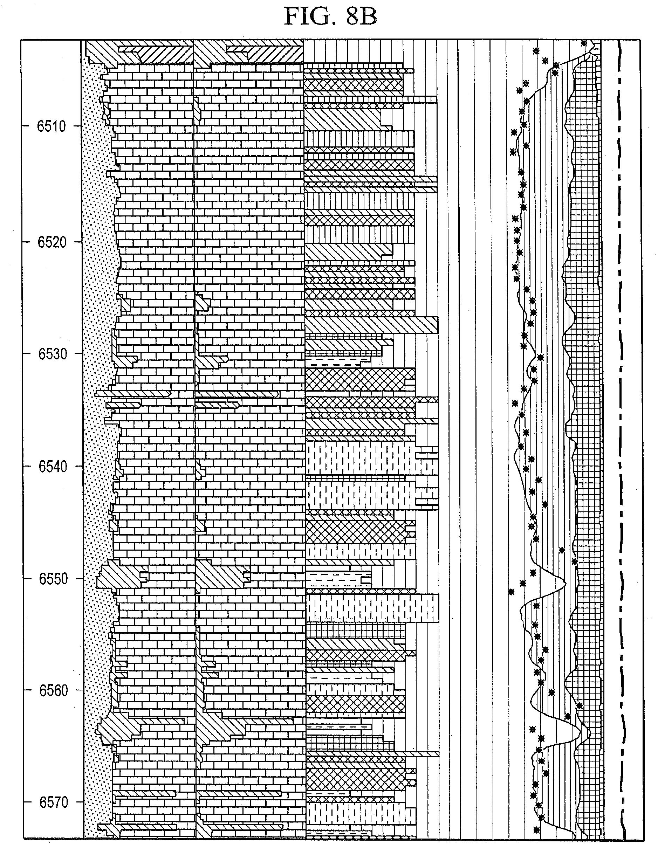

Figure 8B is a log plot of core description like that of Figure 8A as a function of borehole depth after conversion into digital format suitable for computer processing. The core description data is entered into memory of the data processing system D (Figure 10) in the form of digital data. The data is entered for rock layers for subsurface formations of interest based on analysis and testing of well core samples. The data may be entered as the well core analysis is being performed during the course of core description by a core analyst, or at a later time based on notes and observations. The well core data description format may be organized, for example, according to the techniques of United States Patent Application Serial Number 13/616,493 filed September 14, 2012, of which Applicant Sung is a co-inventor. Figure 6A is a plot of core images and associated description data for several cored wells.

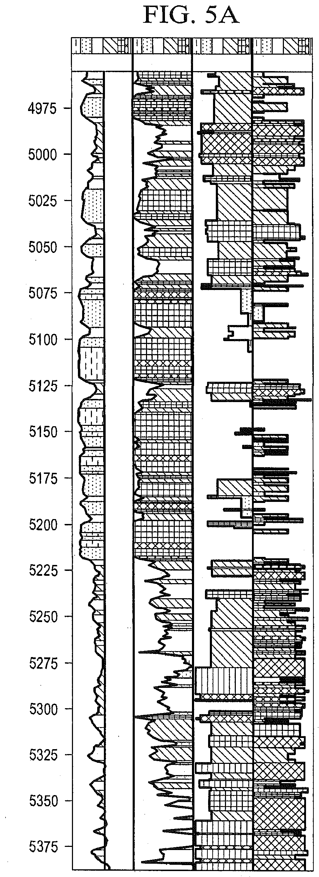

The present invention during step 100 thus takes reservoir rock formation data and establishes core description digital templates. The core description data incorporates rock phases described and interpreted based on using well core data from those wells in the reservoir where cores have been obtained. Figure 5A is another example plot of digital core description data as a function of borehole depth obtained during step 100 from core description data for an existing cored well. Description criteria in reservoir rock can include texture, mineral composition, grain size, pore type, sedimentary structure, lithology, and visual porosity.

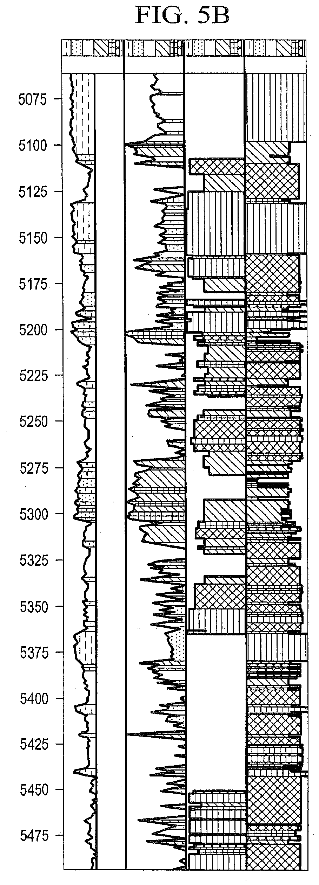

Rock Facies Typing (Step 102): During step 102, the corresponding rock facies from core description digital data as a function of depth for a well are accepted as inputs as a teaching signal for modeling purposes at each depth interval that well for the reservoir. Figure 9A is a display of an example rock facies table of the type used during step 102, and Figure 9B is an example interpretive display plot of rock facies data as a function of borehole depth from such a rock facies table. Figure 5B is an example plot of rock facies based on digital core description data as a function of borehole depth obtained during step 102. The present invention takes rock facies described from core data for a well as a training pattern which is then available as one input for modeling during step 106 described below. Inputs of rock facies as a function of depth are accepted for each cored well in the reservoir, one where core data are available. In this way, for each of the cored wells in the reservoir, the characteristics of multiple wireline logs in that well can be examined in conjunction with the associated rock facies available from cores from the same well.

Wireline Logs (Step 104): During step 104, wireline logs from wells in the reservoir are received as digital inputs for processing according to the present invention. The wireline logs received and processed during step 104 include well logs taken from cored wells where core data have been obtained and are available. Figure 6B is a plot of rock facies from well log data for several cored wells as a function of borehole depth. During step 104, the well logs received as inputs also include logs taken from non-cored or uncored wells where no core samples have been taken.

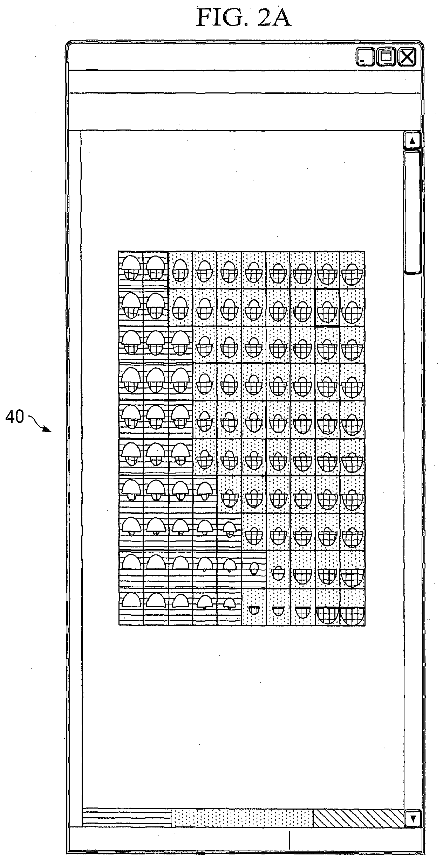

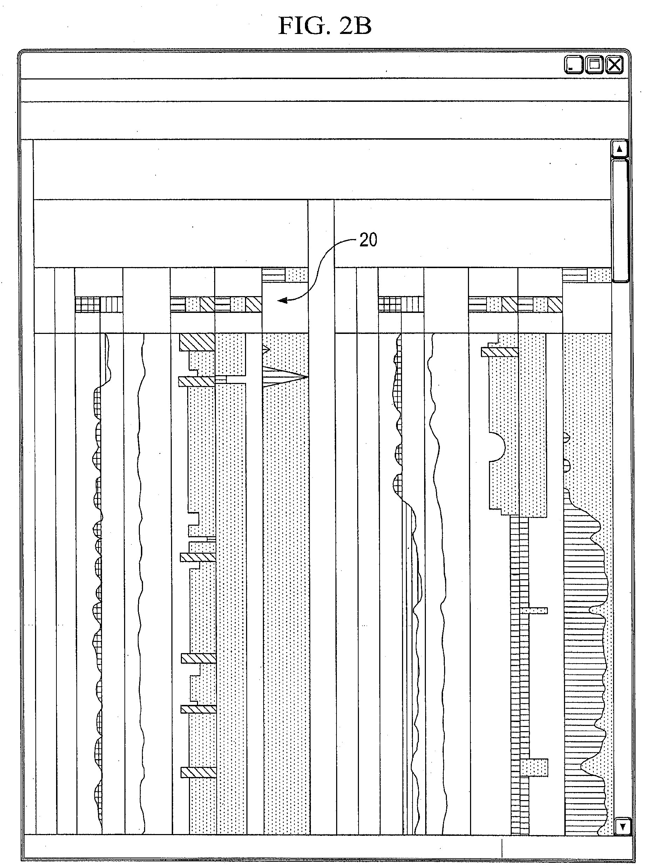

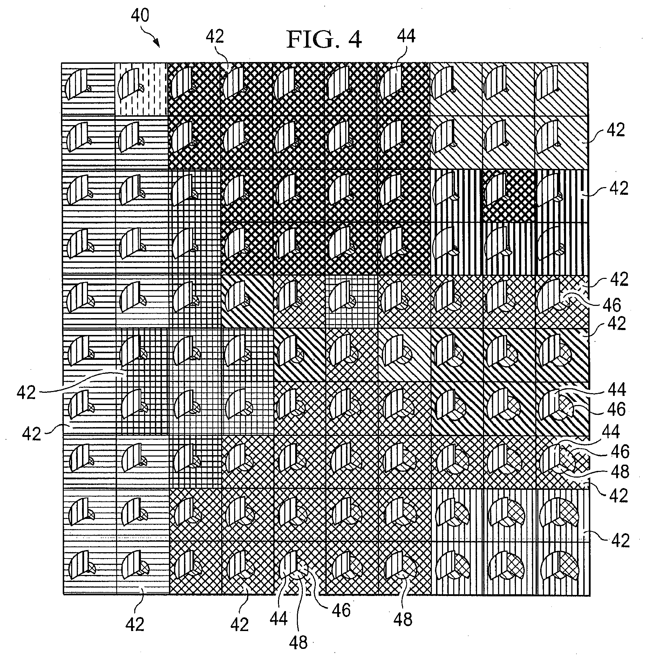

It should be understood that a variety of well logs taken from wells may be used as inputs for the present invention. Examples of well logs which may be used include gamma ray logs, density logs, neutron porosity logs, and sonic logs, as well as other types of well logs. As will be set forth, the wireline logs from the non-cored wells and the wireline logs from the non-cored are the subject of separate subsequent processing according to the present invention. Figure 2 is an example computer screen display indicating in a right portion 10 of data resulting from processing during step 102. The left portion 40 of Figure 2 is an index map shown in greater detail in Figure 4.

Wellbore Centric Modeling (Step 106): The present invention incorporates artificial neural networks and uses multiple logs from cored wells from step 104 and rock facies data from step 102 simultaneously. The present invention takes rock facies described from well core data as a training pattern for an artificial neural network and examines the characteristics of each of the wireline logs in that well with respect to each rock facies.

Each rock facie forms a node in the artificial neural network with the various log responses from the wireline logs being assigned different weights. Figure 4 illustrates an example artificial neural network index map 40 which contains a group of cells or squares 42 symbolizing different rock facies in the reservoir by the different colors in the squares. Further, each of the cells 42 contains three fan-shaped circular sectors as shown at 44, 46 and 48 representing by their different indicia such as colors the proportion or influencing weight of three different types of input well log data for the particular facies represented by that cell. The sectors 44, 46 and 48 in each of the cells in map 40 also represent by their varying relative sizes with respect to each other the relative assigned weight associated in the training pattern with the data from that well log during artificial neural network processing.

For example, if the log for sector 44 is dominating, it is likely that the facies at the upper left in map 40 is present. Similarly, if the log section 48 is dominant, the log sector 46 moderately contributing, and the log for the section 44 having little effect, it is likely that a different facies is present, as shown in the bottom right corner of map 40.

An interconnected neural network is accordingly established. The artificial neural network creates patterns among multiple inputs from steps 102 and 104 and forms teaching signals. An example of artificial Neural Network methodology which can be during the processing according to the present invention is that described in "An Introduction to Neural Networks" by Kevin Gurney, UCL Press 1997. It should be understood that other types of known artificial neural network processing may also be used, if desired. The teaching signals formed in step 106 are based on wireline logs for the cored wells data from step 104 and the corresponding rock facies data from step 102. Teaching signals are formed during step 106 at the depth intervals of interest in the reservoir for each of the cored wells.

Through the interconnected processing units of multiple inputs (wireline logs), a neural network is thus formed. Then weights, or the inter-unit connection strength, are obtained by the process of adaptation to, or learning from, the set of training patterns (core rock facies). By expanding through several cored wells, the errors in the training dataset are statistically minimized. Processing of data in the artificial neural network during step 106 from all cored wells permits adaptation to and learning from training pattern sets for each cored well. The result of processing during step 106 is a training model indicating rock facies as a function of depth for each of the cored wells in the reservoir. Figure 4 is an example of such a training model indicating rock facies as a function of depth.

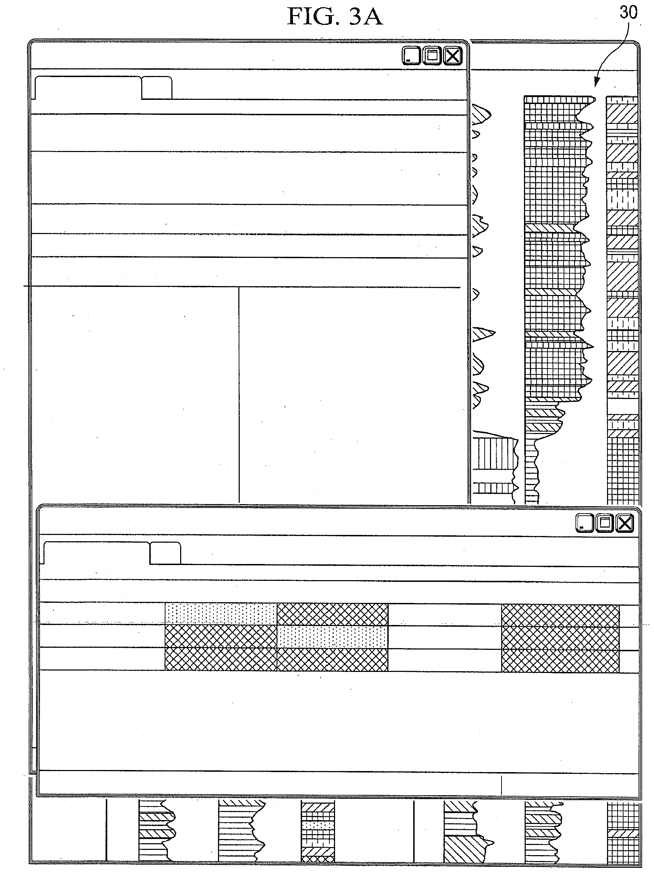

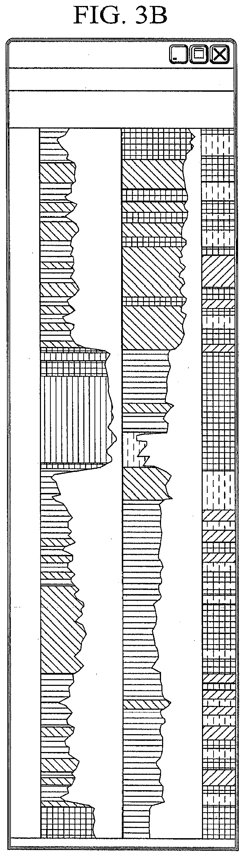

Rock Facies Prediction (Step 108): During step 108, a prediction model is formed of the rock facies for each of the cored wells based on application of the training model formed during step 106 to the well log data from the cored wells. Figure 3 is an example computer screen of data resulting from processing during step 108. The right portion 30 of figure 3 contains plots of input well logs and predicted rock facies log along each depth of interest in a well. The prediction is made using the neural networks of nodes and weights generated during step 106, resulting in a prediction model of rock facies in the cored wells.

Figure 6C is a display of a group of plots of predicted facies data as a function of depth for an example number of cored wells in the same reservoir as that of Figures 5A and 5B. The predicted facies data in each of the wells of Figure 6C is obtained during step 108, as indicated at 60. Figure 6C represent the remaining well locations for which facies data are predicted during step 108. The prediction model is in the form of a log of predicted rock facies as a function of borehole depth for the cored wells.

Matching Core Rock Facies (Step 110): The predicted rock facies resulting from step 108 are next compared during step 110 with actual rock facies described from core data in the same well as a result of step 102. The comparison during step 110 can be made by forming a measure of the cross-correlation coefficient between the predicted rock facies and the actual rock facies. If the cross-correlation is not at an acceptably high level, processing returns to step 106 for further processing by the artificial neural network.

During such further processing, information about the differences observed as a result of the comparison during step 110 is provided as training model feedback for adjustment of the artificial neural network processing used in step 106, and steps 106 and 108 repeated. The processing continues in this manner until a satisfactory match is indicated during step 110 by the presence of a satisfactory high cross-correlation coefficient.

Figure 11 is a plot of an example correlation coefficient of rock facies between core description and prediction according to the present invention. If a cross-correlation coefficient which indicates acceptable conformity with the plot of Figure 11 is obtained during step 110, the training model is then indicated to be satisfactory.

When during step 110 a satisfactorily high cross-correlation coefficient is observed between the predicted rock facies and the actual rock facies, an acceptably high confidence is indicated. Processing according to the present invention then proceeds to step 112 to predict rock facies in non-cored wells.

Non-Cored Rock Facies Prediction (Step 112): Processing according to the present invention is then performed on the well log data received during step 104 for uncored or non-cored wells where no well core data are available or have been collected. The well log data from non-cored wells is provided as inputs for step 112 as indicated schematically at 104A. Predictions are made of rock facies in each of the non-cored wells.

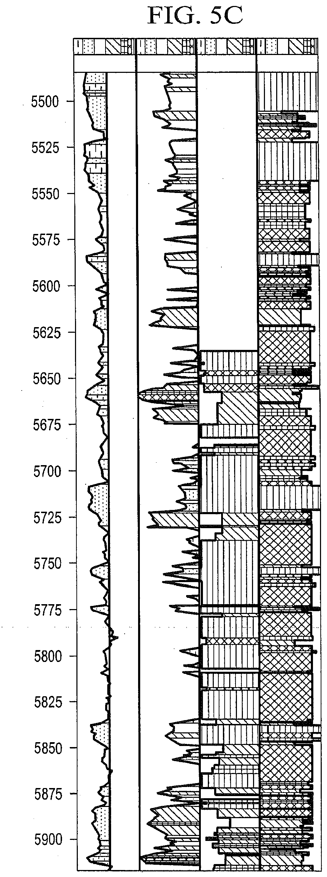

Processing during step 112 utilizes the artificial network from step 106 to analyze the well logs from non-cored wells against the training model developed from cored wells. The processing during step 112 forms postulated or predicted values or estimates of the rock facies in the non-cored wells based on the training model. As a result during step 112 the present invention predicts the rock facies in non-cored wells of the reservoir. The results of step 112 are in the form of a log of predicted rock facies as a function of borehole depth for each of the non-cored wells. Figure 5C is an example plot of such predicted rock facies for a non-cored well in the reservoir.

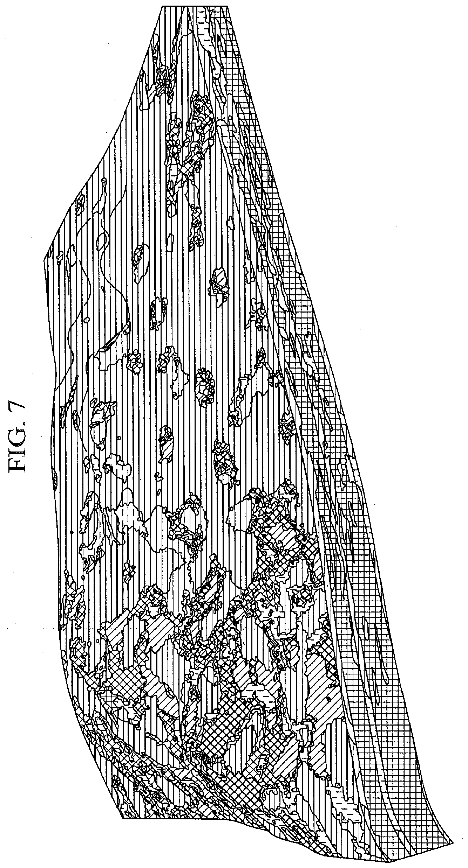

Rock Facies Modeling (Step 114): Rock facies modeling performed during step 114 forms a prediction model of the rock facies over the extent of a region of interest of the reservoir. Such a region of interest may take form of the entire reservoir or a portion of it. The rock facies model is formed may be a two-dimensional facies distribution map (Figure 6D) or a three-dimensional or 3-D model of the reservoir or a portion of the reservoir of interest. Figure 7 is an example computer display of a 3-D model of rock facies of a reservoir, with variations in rock facies indicated in normal practice by different colors.

The choice of modeling utilized is based in part on the rock facies and portions of the wells or reservoir of interest. The modeling may be performed, for example, according to the 3-dimensional modeling methodology of the type described in co-pending U. S. Patent Application No. 13/913,086, "Cluster Petrophysical Uncertainty Modeling", filed July 28, 2011, naming Applicant Sung as a co-inventor.

The models formed during step 114 thus may be of a number of forms. The models may be, in addition to facies distribution maps (Figure 6D) and facies models (Figure 7), in the form of such as facies logs of the type shown in Figure 6C.

Based on the 3-D rock facies models of the reservoir provided as a result of step 114, reservoir analysts are able to assess and evaluate the depositional environment of the reservoir as indicated schematically at step 116, and such assessments are then available for and used in field development as indicated at step 118.

### Data Processing

As illustrated in Figure 10, the data processing system D according to the present invention includes a computer C having a processor 152 and memory 150 coupled to the processor 152 to store operating instructions, control information and database records therein. The computer C may be of several types as has been described.

The computer C has a user interface 156 and an output data display 158 for displaying output data or records of lithological facies and reservoir attributes according to the present invention. The output display 158 includes components such as a printer and an output display screen capable of providing printed output information or visible displays in the form of graphs, data sheets, graphical images, data plots and the like as output records or images.

The user interface 156 of computer C also includes a suitable user input device or input/output control unit 160 to provide a user access to control or access information and database records and operate the computer C. Data processing system D further includes a database 162 stored in computer memory, which may be internal memory 150, or an external, networked, or non-networked memory as indicated at 164 in an associated database server 166.

The data processing system D includes program code 168 stored in memory 150 of the computer C. The program code 168, according to the present invention is in the form non-transitory computer operable instructions causing the data processor 152 to perform the computer implemented method of the present invention in the manner described above and illustrated in Figures 13.

It should be noted that program code 168 may be in the form of microcode, programs, routines, or symbolic computer operable languages that provide a specific set of ordered operations that control the functioning of the data processing system D and direct its operation. The instructions of program code 168 may be stored in non-transitory form in memory 150 of the computer C, or on computer diskette, magnetic tape, conventional hard disk drive, electronic read-only memory, optical storage device, or other appropriate data storage device having a computer usable medium stored thereon. Program code 168 may also be contained in non-transitory form on a data storage device, such as server 166, as a computer readable medium.

In order to verify the strength of an example neural network according to the present invention, a blind test was applied. Rock facies were predicted using this example neural network in a cored well. These predicted rock facies were compared with actual rock facies described from cores in the same well. A high cross-correlation coefficient like that of Figure 11 was observed between the two sets of data. The high cross-correlation coefficient provided high confidence to use the neural network to predict rock facies in the non-cored wells.

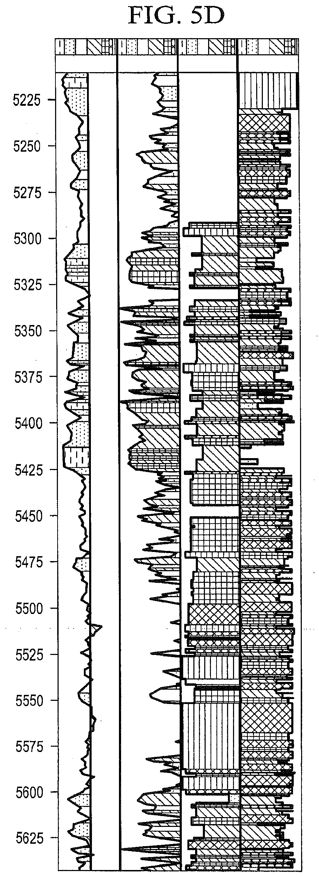

Figures 5A, 5B, 5C, and 5D are example plots of actual rock facies from four different wells in an example reservoir. Figure 5A is a Gamma Ray log from a first well. Figure 5B is a Neutron Porosity log from a second well, while Figure 5C is a rock facies log from core description data for a third well. Figure 5D is a rock facies log predicted by Artificial Neural network Processing. As noted, the data displayed in Figures 5A, 5B, 5C, and 5D are from four different wells.

Data of the types displayed in Figures 5A through 5D are utilized as known data points to provide quality control and to verify the accuracy of models obtained by Artificial Neural Network processing according to the present invention. As a result, analysts can utilize such known data points with confidence in prediction of facies data points for wells where no cores are taken.

With the present invention, turn-around time for rock facies prediction for a reservoir was reduced from what previously took days or weeks of manual interpretation before to hours of neural network rock facies prediction in a data processing system according to the present invention. Furthermore, significant cost savings can be realized by minimizing the need for acquiring expensive core data for rock facies identification in hundreds of wells.

From the foregoing, it can be seen that the present invention incorporates rock phases described and interpreted using well core data. Then well logs characteristics of the same well are examined for each rock facies. Artificial neural networks in a data processing system are then used to build a training image. Well log data from non-cored wells with no well core data are then collected, and these well logs analyzed against the training image from core and well log data have been obtained in order to predict the rock facies in non-cored wells. Rock facies models of the entire reservoir with accurately predicted facies for each of the wells of the reservoir are then formed.

The present invention incorporates artificial neural networks and uses multiple logs simultaneously. It creates patterns among multiple inputs and the teaching signal of rock facies from core by simulating learning activity through the use of artificial neural networks. Accurate prediction of rock facies according to the present invention capitalizes upon the accuracy available from existing well core data. The present invention also minimizes the substantial costs of acquiring core samples for core description data from wells from which cores have not been obtained.

The invention has been sufficiently described so that a person with average knowledge in the matter may reproduce and obtain the results mentioned in the invention herein Nonetheless, any skilled person in the field of technique, subject of the invention herein, may carry out modifications not described in the request herein, to apply these modifications to a determined methodology, or in the performance of the same, requires the claimed matter in the following claims.

It should be noted and understood that there can be improvements and modifications made of the present invention described in detail above.

## Claims

1. A computer implemented method of forming with a computer system a three dimensional model of rock facies of a subsurface reservoir based on well core description data obtained from core samples (104) of cored wells in the subsurface reservoir and well log data from the cored wells, whereby the well log data from the cored wells is obtained from well logs of different types, and on well log data (104A) from non-cored wells from which core samples are not available, the method comprising the computer processing steps of:
(a) forming (100) a core description model of the rock facies adjacent the well bores of the cored wells based on the well core description data;
(b) forming (106) a training model of rock facies of the cored wells based on the well core description data and the well log data from the cored wells; wherein forming the training model comprises the steps of:
forming an artificial neural network based on the well core description data and the well log data from the cored wells;
forming a node in the artificial neural network for the rock facies of the core description model for each of the cored wells; and
assigning different weights to the different types of well log data from the different cored wells for the nodes of the cored wells;
(c) forming (108) a prediction model of rock facies for the cored wells based on the training model of rock facies of the cored wells and the well log data from the cored wells;
(d) comparing (110) the prediction model of rock facies for the cored wells with the core description model of rock facies; and
(e) if the results of the step of comparing indicate a satisfactory correspondence between the prediction model of rock facies for the cored wells with the core description model, forming a prediction model of rock facies for the non-cored wells in the reservoir based upon the training model of rock facies of the cored wells; and, if not,
(f) adjusting the training model of rock facies for the cored wells, by performing the steps of:
(1) forming an adjusted training model, and
(2) returning to the step of comparing for performing the step of comparing the adjusted training model so formed with the core description model of the rock facies;
and repeating steps (1) and (2) until a satisfactory correspondence between the prediction model of rock facies for the cored wells and the core description model is achieved and then forming a prediction model of rock facies for the non-cored wells in the reservoir based on the adjusted training model;
the method further comprising the step of forming a prediction model of rock facies of the reservoir,
wherein the step of forming a prediction model of rock facies of the reservoir comprises the step of upscaling the prediction model of rock facies for the non-cored wells and the core description model of rock facies to a three-dimensional model of rock facies of the subsurface reservoir.

2. A data processing system forming a three dimensional model of rock facies of a subsurface reservoir based on well core description data obtained from core samples of cored wells in the subsurface reservoir and well log data (104) from the cored wells, whereby the well log data from the cored wells is obtained from well logs of different types, and on well log data (104A) from non-cored wells from which core samples are not available, the data processing system comprising a processor performing the computer implemented steps of the method of claim 1.

3. A data storage device having stored in a computer readable medium non-transitory computer operable instructions for causing a data processor, in forming a three dimensional model of rock facies of a subsurface reservoir based on well core description data obtained from core samples of cored wells in the subsurface reservoir and well log data from the cored wells, whereby the well log data from the cored wells is obtained from well logs of different types, and on well log data from non-cored wells from which core samples are not available, to perform a method according to claim 1.

## Patentansprüche

1. Computerimplementiertes Verfahren zum Bilden mit einem Computersystem eines dreidimensionalen Modells von Gesteinfazies eines Untergrundreservoirs basierend auf Bohrlochkernbeschreibungsdaten, welche von Kernproben (104) von entkernten Bohrlöchern in dem Untergrundreservoir erhalten sind, und auf Bohrlochprotokolldaten von den entkernten Bohrlöchern, wobei die Bohrlochprotokolldaten von den entkernten Bohrlöchern von Bohrlochprotokollen unterschiedlichen Typs erhalten sind, und auf Bohrlochprotokolldaten (104A) von nicht entkernten Bohrlöchern, von welchen keine Kernproben verfügbar sind, wobei das Verfahren die folgenden Computerverarbeitungsschritte umfasst:
(a) Bilden (100) eines Kernbeschreibungsmodells der Gesteinfazies, welche an den Bohrungen der entkernten Bohrlöcher anliegen, basierend auf den Bohrlochkernbeschreibungsdaten;
(b) Bilden (106) eines Trainingsmodells von Gesteinfazies der entkernten Bohrlöcher basierend auf den Bohrlochkernbeschreibungsdaten und den Bohrlochprotokolldaten von den entkernten Bohrlöchern; wobei das Bilden des Trainingsmodells die folgenden Schritte umfasst:
Bilden eines künstlichen neuronalen Netzwerks basierend auf den Bohrlochkernbeschreibungsdaten und den Bohrlochprotokolldaten von den entkernten Bohrlöchern;
Bilden eines Knotens in dem künstlichen neuronalen Netzwerk für die Gesteinfazies des Kernbeschreibungsmodells für jeden der entkernten Bohrlöcher; und
Zuweisen von unterschiedlichen Gewichten zu den unterschiedlichen Typen von Bohrlochprotokolldaten von den unterschiedlichen entkernten Bohrlöchern für die Knoten der entkernten Bohrlöcher;
(c) Bilden (108) eines Prädiktionsmodells von Gesteinfazies für die entkernten Bohrlöcher basierend auf dem Trainingsmodell von Gesteinfazies und den Bohrlochprotokolldaten von den entkernten Bohrlöchern;
(d) Vergleichen (110) des Prädiktionsmodells von Gesteinfazies für die entkernten Bohrlöcher mit dem Kernbeschreibungsmodell von Gesteinfazies; und
(e) falls die Ergebnisse des Schritts des Vergleichens eine ausreichende Übereinstimmung zwischen dem Prädiktionsmodell von Gesteinfazies für die entkernten Bohrlöcher mit dem Kernbeschreibungsmodell angeben, Bilden eines Prädiktionsmodells von Gesteinfazies für die nicht entkernten Bohrlöcher in dem Reservoir basierend auf dem Trainingsmodell von Gesteinfazies der entkernten Bohrlöcher; und, falls nicht,
(f) Einstellen des Trainingsmodells von Gesteinfazies für die entkernten Bohrlöcher, durch Ausführen der folgenden Schritte:
(1) Bilden eines eingestellten Trainingsmodells, und
(2) Zurückkehren zum Schritt des Vergleichens zum Ausführen des Schritts des Vergleichens des so gebildeten eingestellten Trainingsmodells mit dem Kernbeschreibungsmodell der Gesteinfazies;
und Wiederholen der Schritte (1) und (2), bis eine ausreichende Übereinstimmung zwischen dem Prädiktionsmodell von Gesteinfazies für die entkernten Bohrlöcher und dem Kernbeschreibungsmodell erhalten wird und danach Bilden eines Prädiktionsmodells von Gesteinfazies für die nicht entkernten Bohrlöcher in dem Reservoir basierend auf dem eingestellten Trainingsmodell;
wobei das Verfahren ferner den Schritt des Bildens eines Prädiktionsmodells von Gesteinfazies vom Reservoir umfasst,
wobei der Schritt des Bildens eines Prädiktionsmodells von Gesteinfazies des Reservoirs den Schritt des Hochskalierens des Prädiktionsmodells von Gesteinfazies für die nicht entkernten Bohrlöcher und des Kernbeschreibungsmodells von Gesteinfazies zu einem dreidimensionalen Modell von Gesteinfazies des Untergrundreservoirs umfasst.

2. Datenverarbeitungssystem, welches ein dreidimensionales Modell von Gesteinfazies eines Untergrundreservoirs basierend auf Bohrlochbeschreibungsdaten, welche von Kernproben von entkernten Bohrlöcher in dem Untergrundreservoir und Bohrlochprotokolldaten (104) von den entkernten Bohrlöcher erhalten werden, wodurch die Bohrlochprotokolldaten aus den entkernten Bohrlöchern von Bohrlochprotokollen unterschiedlichen Typs erhalten werden, und basierend auf Bohrlochprotokolldaten (104A) aus nicht entkernten Bohrlöchern bildet, von welchen keine Kernproben verfügbar sind, wobei das Datenverarbeitungssystem einen Prozessor umfasst, der die computerimplementierten Schritte des Verfahrens nach Anspruch 1 ausführt.

3. Datenspeichervorrichtung, welche in einem computerlesbaren Medium nichtflüchtige computerbetreibbare Anweisungen speichert, um zu veranlassen, dass ein Datenprozessor, durch Bilden eines dreidimensionalen Modells von Gesteinfazies eines Untergrundreservoirs basierend auf Bohrlochkernbeschreibungsdaten, welche von Kernproben von entkernten Bohrlöcher in dem Untergrundreservoir erhalten sind, und Bohrlochprotokolldaten von den entkernten Bohrlöchern, wodurch die Bohrlochprotokolldaten von den entkernten Bohrlöchern von Bohrlochprotokollen unterschiedlichen Typs erhalten werden, und basierend auf Bohrlochprotokolldaten von nicht entkernten Bohrlöchern, von welchen Kernproben nicht verfügbar sind, ein Verfahren nach Anspruch 1 ausführt.

## Revendications

1. Procédé mis en oeuvre par ordinateur pour former, avec un système informatique, un modèle à trois dimensions de faciès de roche d'un gisement souterrain sur la base de données de description de carotte de forage obtenues à partir d'échantillons de carotte (104) de puits carottés dans le gisement souterrain et de données de diagraphie de puits des puits carottés, dans lequel les données de diagraphie de puits des puits carottés sont obtenues à partir de diagraphies de puits de différents types, et sur la base de données de diagraphie de puits (104A) de puits non carottés pour lesquels des échantillons de carotte ne sont pas disponibles, le procédé comprenant les étapes de traitement informatique suivantes :
(a) formation (100) d'un modèle de description de carotte du faciès de roche adjacent aux puits de forage des puits carottés sur la base des données de description de carotte de forage,
(b) formation (106) d'un modèle d'apprentissage de faciès de roche des puits carottés sur la base des données de description de carotte de forage et des données de diagraphie de puits des puits carottés, dans lequel la formation du modèle d'apprentissage comprend les étapes suivantes :
formation d'un réseau neuronal artificiel sur la base des données de description de carotte de forage et des données de diagraphie de puits des puits carottés,
formation d'un nœud dans le réseau neuronal artificiel pour le faciès de roche du modèle de description de carotte pour chacun des puits carottés, et
attribution de différents poids aux différents types de données de diagraphie de puits des différents puits carottés pour les nœuds des puits carottés,
(c) formation (108) d'un modèle de prévision de faciès de roche pour les puits carottés sur la base du modèle d'apprentissage du faciès de roche et des données de diagraphie de puits des puits carottés,
(d) comparaison (110) du modèle de prévision de faciès de roche pour les puits carottés avec le modèle de description de carotte du faciès de roche, et
(e) si les résultats de l'étape de comparaison indiquent une correspondance satisfaisante entre le modèle de prévision de faciès de roche pour les puits carottés et le modèle de description de carotte, formation d'un modèle de prévision de faciès de roche pour les puits non carottés dans le gisement sur la base du modèle d'apprentissage du faciès de roche des puits carottés, et sinon,
(f) ajustement du modèle d'apprentissage de faciès de roche pour les puits carottés, en exécutant les étapes suivantes :
(1) formation d'un modèle d'apprentissage ajusté, et
(2) retour à l'étape de comparaison pour exécuter l'étape de comparaison du modèle d'apprentissage ajusté ainsi formé avec le modèle de description de carotte du faciès de roche,
et répétition des étapes (1) et (2) jusqu'à l'obtention d'une correspondance satisfaisante entre le modèle de prévision de faciès de roche pour les puits carottés et le modèle de description de carotte, puis formation d'un modèle de prévision du faciès de roche pour les puits non carottés dans le gisement sur la base du modèle d'apprentissage ajusté,
le procédé comprenant en outre l'étape de formation d'un modèle de prévision de faciès de roche du gisement,
dans lequel l'étape de formation d'un modèle de prévision de faciès de roche du gisement comprend l'étape consistant à amplifier le modèle de prévision du faciès de roche pour les puits non carottés et le modèle de description de carotte du faciès de roche en un modèle à trois dimensions de faciès de roche du gisement souterrain

2. Système de traitement de données formant un modèle à trois dimensions de faciès de roche d'un gisement souterrain sur la base de données de description de carotte de forage obtenues à partir d'échantillons de carotte de puits carottés dans le gisement souterrain et de données de diagraphie de puits (104) des puits carottés, moyennant quoi les données de diagraphie de puits des puits carottés sont obtenues à partir de diagraphies de puits de différents types, et sur la base de données de diagraphie de puits (104A) de puits non carottés pour lesquels des échantillons de carotte ne sont pas disponibles, le système de traitement de données comprenant un processeur exécutant les étapes mises en œuvre par ordinateur du procédé selon la revendication 1.

3. Dispositif de stockage des données stockant des instructions non transitoires exécutables par ordinateur dans un support lisible par ordinateur, pour amener un processeur de données à exécuter un procédé selon la revendication 1 en formant un modèle à trois dimensions de faciès de roche d'un gisement souterrain sur la base de données de description de carotte de forage obtenues à partir d'échantillons de carotte de puits carottés dans le gisement souterrain et de données de diagraphie de puits des puits carottés, moyennant quoi les données de diagraphie de puits des puits carottés sont obtenues à partir de diagraphies de puits de différents types, et sur la base de données de diagraphie de puits de puits non carottés pour lesquels des échantillons de carotte ne sont pas disponibles.
